# EUROPEAN PATENT APPLICATION

(11) **EP 4 600 525 A1**
(43) Date of publication of application: **13.08.2025**
(21) Application number: 23915178.0
(22) Date of filing: 20.12.2023
(51) Int. Cl.: F16F 9/34, F16L 37/42, B60G 11/27, F16F 9/43

(54) **INTEGRATED PRESSURE RETAINING VALVE, AIR SUSPENSION SYSTEM, AND VEHICLE**

(71) Applicant: Langfang Shuchang Auto Parts Co., Ltd, Langfang, Hebei 065000 (CN)
(72) Inventor: LIU, Jiaqi, Langfang Hebei 065000 (CN); LU, Qingshan, Langfang Hebei 065000 (CN); WEI, Renjie, Langfang Hebei 065000 (CN); LIU, Xuliang, Langfang Hebei 065000 (CN); XU, Xiaolong, Langfang Hebei 065000 (CN)
(74) Representative: PPR AG
(86) International application number: PCT/CN2023/140444
(87) International publication number: WO 2025/129532

(57) **Abstract**

Embodiments of the present application provide an integrated pressure retaining valve, an air suspension system and a vehicle, which relates to the field of vehicle technology. The integrated pressure retaining valve includes a valve housing, a pressure retaining component and a fixing component, where the pressure retaining component includes a valve core, a reset piece and a first sealing piece, the first sealing piece is fixed on the valve core, the reset piece is connected between the valve housing and the valve core; and the fixing component includes a fixing piece. **In an** installation process of the air suspension system, the integrated pressure retaining valve is connected to an airport of an air spring, and the reset piece of the integrated pressure retaining valve applies a force to the valve core, so that the first sealing piece can seal the first end and the integrated pressure retaining valve is in a pressure retaining state, thereby ensuring an internal gas pressure of the air spring and avoiding adjustment of a shape of the air spring. After that the air spring is installed to a frame, then the air duct is directly inserted into the integrated pressure retaining valve, the air duct is fixed by the fixing piece, to conduct the air duct with the airport of the air spring, making the installation process of the air suspension system time-saving and labor-saving.

## Description

### TECHNICAL FIELD

The present application relates to the field of vehicle technology and, in particular, to an integrated pressure retaining valve, an air suspension system and a vehicle.

### BACKGROUND

With the rapid development of electrification and intelligence in motor vehicle chassis, the application of air suspension is becoming increasingly common. An air spring can achieve consistency in the intrinsic frequency of the vehicle body by compressibility of gas. Change of an internal pressure of the air spring by charging or discharging can adjust height of the suspension and improve comfort while riding in vehicle.

In the prior art, the air suspension system includes a frame, a gas pump, a gas reservoir, an air duct and an air spring. When installing the air suspension system, a shape of the air spring is first adjusted, the air spring is installed to the frame, then the gas pump and the gas reservoir are installed to the frame and then the air duct is connected between the gas reservoir and the air spring.

However, there are time-consuming and labor-intensive problems in the installation process of the air suspension system.

### SUMMARY

An embodiment of the present application provides an integrated pressure retaining valve, an air suspension system and a vehicle, which are used to solve the time-consuming and labor-intensive problems in the installation process of the air suspension system.

In a first aspect, an embodiment of the present application provides an integrated pressure retaining valve, which applied to an air suspension system of a vehicle, where the air suspension system includes an air spring and an air duct, the integrated pressure retaining valve includes a valve housing, a pressure retaining component, and a fixing component;
the valve housing has a first end and a second end arranged opposite to each other in an axial direction of the integrated pressure retaining valve, and the valve housing is detachably connected to an airport of the air spring;
the pressure retaining component includes a valve core, a reset piece, and a first sealing piece, where the valve core is located inside the valve housing, the first sealing piece is fixed on the valve core, the reset piece is connected between the valve housing and the valve core, and the reset piece is configured to apply a force to the valve core when the integrated pressure retaining valve is in a pressure retaining state, to seal the first end by the first sealing piece;
the fixing component includes a fixing piece, the fixing piece is at least partially located within the valve housing, and the fixing piece is configured to be detachably connected to the air duct when the air duct is inserted into the integrated pressure retaining valve, to allow the air duct to detach the first sealing piece from the first end through the valve core, and to conduct the air duct with the airport of the air spring.

In a possible implementation, the valve core has a gas channel and a conducting port, where the gas channel runs through one end of the valve core away from the air spring in the axial direction of the integrated pressure retaining valve, the conducting port is communicated with the gas channel, and the gas channel can be communicated with the air duct;
the first sealing piece is clamped on the valve core, the valve housing has a sealing surface, and the first sealing piece is in contact with the sealing surface, to position the conducting port of the valve core on a side of the first sealing piece away from the air spring.

In a possible implementation, the reset piece is a spring, a first step is provided inside the valve housing, the valve core has a valve core step, and the spring is abutted between the first step and the valve core step.

In a possible implementation, the integrated pressure retaining valve further includes a second sealing piece, and a second step is provided inside the valve housing, the second step is further away from the air spring relative to the first step in the axial direction of the integrated pressure retaining valve, the second sealing piece is located between the pressure retaining component and the fixing component in the axial direction of the integrated pressure retaining valve, and the second sealing piece is abutted with the second step, and when the air duct is inserted into the integrated pressure retaining valve, an inner side of the second sealing piece is abutted with an outer wall of the air duct, and an outer side of the second sealing piece is abutted with an inner wall of the valve housing.

In a possible implementation, the fixing piece can move upwards along the axial direction of the integrated pressure retaining valve, the fixing piece includes a circular ring body, a plurality of cantilevers, and a plurality of fixing protrusions, where the plurality of cantilevers and the plurality of fixing protrusions are fixedly connected to the circular ring body in sequence along a circumferential direction of the circular ring body, two adjacent cantilevers are spaced apart, at least one fixing protrusion is fixed on an inner side of each cantilever, and can compress the air duct.

In a possible implementation, the fixing component further includes a snap ring, and the snap ring can be clamped on the plurality of cantilevers of the fixing piece.

In a possible implementation, the fixing piece is fixed inside the valve housing, the fixing piece includes a circular ring body and a plurality of cantilevers, an axis of the circular ring body is coaxial with an axis of the valve core, the plurality of cantilevers are fixedly connected in sequence along a circumferential direction of the circular ring body, two adjacent cantilevers are spaced apart, and the cantilever can compress the air duct.

In a possible implementation, the fixing component further includes a limiting ring, a fixing ring, and a detachment sleeve, a third step and a fourth step are provided inside the valve housing, the limiting ring and the fixing ring are fixed between the third step and the fourth step, and the circular ring body of the fixing piece is sandwiched between the limiting ring and the fixing ring;
the detachment sleeve is movably limited between the fixing ring and the fixing piece, and when the air duct is detached from the integrated pressure retaining valve, the detachment sleeve compresses the plurality of cantilevers of the fixing piece along the axial direction of the integrated pressure retaining valve, to detach the plurality of cantilevers of the fixing piece from the air duct.

In a second aspect, an embodiment of the present application provides an air suspension system, which includes an air spring, an air duct and the integrated pressure retaining valve;
the integrated pressure retaining valve is detachably installed between the air spring and the air duct.

In a third aspect, an embodiment of the present application provides a vehicle, which includes the air suspension system as described above.

The embodiments of the present application provides an integrated pressure retaining valve, an air suspension system and a vehicle, where in the installation process of the air suspension system, by connecting the integrated pressure retaining valve to the airport of the air spring, the reset piece of the integrated pressure retaining valve applies a force to the valve core, which enables the first sealing piece to seal the first end and thus the integrated pressure retaining valve is in a pressure retaining state, thereby ensuring an internal gas pressure of the air spring, avoiding adjustment of the shape of the air spring, and thus making the installation of the air spring time-saving and labor-saving. Afterwards, the air spring is installed to the frame, and then the air duct is directly inserted into the integrated pressure retaining valve and is fixed by the fixing piece, thereby conducting the air duct with the airport of the air spring and thus making the installation process of the air suspension system time-saving and labor-saving. In addition, when the air duct is detached from the integrated pressure retaining valve, the reset piece of the integrated pressure retaining valve applies a force to the valve core, which enables the first sealing piece to seal the first end, and thus the integrated pressure retaining valve is in a pressure retaining state, ensuring the internal gas pressure of the air spring and thus ensuring a driving safety of the vehicle. When performing an airtightness testing on the air spring, the air duct is detached, the reset piece of the integrated pressure retaining valve applies a force to the valve core, which allows the first sealing piece to seal the first end, and the integrated pressure retaining valve is thus in a pressure retaining state, ensuring the internal gas pressure of the air spring and facilitating detection of an airtightness of the air spring.

In addition, the integrated pressure retaining valve provided in the embodiments of the present application integrates the pressure retaining component and the fixing component to the valve housing so that the integrated pressure retaining valve has a pressure retaining function and a fixing function. In the installation process of the air suspension system, the integrated pressure retaining valve is connected to an airport of the air spring, and the integrated pressure retaining valve is in a pressure retaining state; and when the air duct is directly inserted into the integrated pressure retaining valve, the air duct is fixed by the fixing piece.

When the air duct is detached from the integrated pressure retaining valve, the air duct is directly detached from the fixing piece to complete the detachment, making the detachment of the air duct simple and convenient.

### BRIEF DESCRIPTION OF DRAWINGS

To describe the technical solutions in embodiments of the present application or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.
FIG. 1 is a schematic diagram of an air suspension system of a vehicle according to an embodiment of the present application.
FIG. 2 is a schematic structural diagram of an integrated pressure retaining valve according to Embodiment I of the present application.
FIG. 3 is a schematic sectional diagram of the integrated pressure retaining valve in FIG. 2.
FIG. 4 is a schematic exploded diagram of the integrated pressure retaining valve in FIG. 2.
FIG. 5 is a schematic sectional diagram of a valve housing in FIG. 2.
FIG. 6 is a schematic sectional diagram of a valve core in FIG. 2.
FIG. 7 is a schematic diagram of a fixing piece in FIG. 3 in a first perspective view.
FIG. 8 is a schematic diagram of the fixing piece in FIG. 3 in a second perspective view.
FIG. 9 is a schematic diagram of the integrated pressure retaining valve in FIG. 2 not with an air duct.
FIG. 10 is a schematic diagram of the integrated pressure retaining valve in FIG. 9 not installing with a snap ring.
FIG. 11 is a schematic diagram of the integrated pressure retaining valve in FIG. 10 after installing with the snap ring.
FIG. 12 is a schematic diagram of an integrated pressure retaining valve after installing with an air duct according to Embodiment II of the present application.
FIG. 13 is a sectional schematic diagram of the integrated pressure retaining valve and the air duct in FIG. 12.
FIG. 14 is a schematic sectional diagram of a valve housing in FIG. 12.
FIG. 15 is a schematic structural diagram of a fixing piece in FIG. 13.
FIG. 16 is a schematic structural diagram of a limiting ring in FIG. 13.
FIG. 17 is a schematic structural diagram of a fixing ring in FIG. 13.
FIG. 18 is a schematic structural diagram of a detachment sleeve in FIG. 13.

### Description of reference numbers:

1- integrated pressure retaining valve; 2- gas pump; 3- gas reservoir; 4- air spring; 5- air duct; 501- insertion mark; 10- valve housing; 101- first end; 1011- sealing surface; 102- second end; 103- sealing ring; 104- first step; 105- second step; 106-third step; 107- fourth step; 111- first section; 112- second section; 113- third section; 114- fourth section; 115- fifth section; 21- valve core; 211- gas channel; 212-conducting port; 213- groove; 214- valve core step; 22- reset piece; 23- first sealing piece; 31- fixing piece; 311- circular ring body; 312- cantilever; 3121- cylindrical surface; 3122- conical surface; 3123- first limiting step; 313-fixing protrusion; 32-snap ring; 33- limiting ring; 331- limiting surface; 34- fixing ring; 341- second limiting step; 35- detachment sleeve; 351- matching step; 352- detachment surface; 40- second sealing piece.

### DESCRIPTION OF EMBODIMENTS

To make the objectives, technical solutions, and advantages of the embodiments of the present application clearer, the following clearly and completely describes the technical solutions in the embodiments of the present application with reference to the accompanying drawings in the embodiments of the present application. Apparently, the described embodiments are merely some rather than all of the embodiments of the present application. Based on the embodiments of the present application, all other embodiments obtained by persons of ordinary skill in the art without creative efforts shall fall within the protection scope of the present application.

It should be noted that the terms "first", "second" are only used for purposes of description, and cannot be understood as indicating or implying relative importance or implicitly indicating the number of indicated technical features. Thus, a feature delimited with "first", "second" may expressly or implicitly include at least one such feature. In the description of the present application, "a plurality of" means at least two, such as two, three, etc., unless otherwise expressly and specifically defined.

In the present application, unless otherwise clearly specified and defined, the terms "install", "connect", "fix" and the like should be understood in a broad sense, for example, they may be a fixed connection, and may also be a detachable connection, or be integral; they may be a mechanical connection, an electrical connection, or communication with each other; they may be a direct connection, and may also be an indirect connection through an intermediate medium, may be an internal communication between two pieces or an interaction relationship between the two pieces, unless otherwise expressly defined. For persons of ordinary skill in the art, the specific meanings of the above terms in the present application may be understood according to specific circumstances.

In this application, unless otherwise expressly specified and defined, a first feature is "above" or "below" a second feature, which mean that the first feature is in direct contact with the second feature, or the first feature and the second feature may be in indirect contact through an intermediate medium. Moreover, the first feature is "above", "on top of", and "over" the second feature, which mean that the first feature is directly or diagonally above the second feature, or only indicates that a horizontal height of the first feature is higher than that of the second feature. The first feature is "below", "on bottom of", and "under" the second feature, which mean that the first feature is directly or diagonally below the second feature, or only indicates that the horizontal height of the first feature is smaller than that of the second feature.

In the above description, reference terms "an embodiment," "some embodiments," "an example," "a specific example," or "some examples", etc., mean that a particular feature, structure, material, or characteristic described in conjunction with the embodiment or example is included in at least one embodiment or example of the present application. In this specification, schematic representations of the above terms are not necessarily directed to the same embodiment or example. Furthermore, the specific feature, structure, material or characteristic described may be combined in any suitable manner in any one or more embodiments or examples. Furthermore, a person skilled in the art may combine and join the different embodiments or examples described in this specification, as well as the features of the different embodiments or examples, without conflicting with each other.

As stated in the background, there are time-consuming and labor-intensive problems in an installation process of an air suspension system. The applicant found that the reason for the problems is that in the installation process of the air suspension system, when installing an air spring, there is no gas inside the air spring and thus the air spring is in a weak state, and it is necessary to adjust a shape of the air spring to a shape as if the air spring is filled with gas, and the adjustment process is time-consuming and labor-intensive.

In order to solve the above problems, the embodiments of the present application provide an integrated pressure retaining valve, an air suspension system, and a vehicle. The integrated pressure retaining valve has a pressure retaining function and a fixing function. In the installation process of the air suspension system, by connecting the integrated pressure retaining valve to an airport of the air spring, the integrated pressure retaining valve is in a pressure retaining state, which may ensure an internal gas pressure of the air spring, avoid adjusting a shape of the air spring, and make an installation of the air spring time-saving and labor-saving. After the air spring is installed to a frame, an air duct is directly inserted into the integrated pressure retaining valve, and the air duct is fixed by the integrated pressure retaining valve, thereby conducting the air duct with the airport of the air spring, and making the installation process of the air suspension system time-saving and labor-saving.

The following provides a detailed explanation of the integrated pressure retaining valve, the air suspension system, and the vehicle provided in the embodiments of the present application in conjunction with specific embodiments.

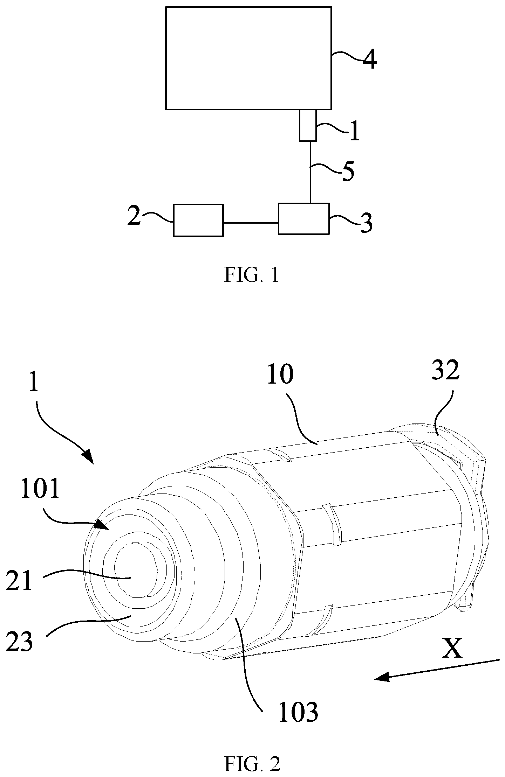

As shown in FIG. 1, an embodiment of the present application provides an integrated pressure retaining valve 1, which applied to an air suspension system of a vehicle. The air suspension system includes a frame, a gas pump 2, a gas reservoir 3, an air spring 4, and an air duct 5. The gas pump 2, the gas reservoir 3 and the air spring 4 are installed to the frame. The gas pump 2 is connected to the gas reservoir 3, and the air duct 5 is connected to the gas reservoir 3. The integrated pressure retaining valve 1 is detachably installed between the air duct 5 and the air spring 4. When the air spring 4 needs to be inflated, the gas pump 2 is activated to fill gas in the gas reservoir 3 into the air spring 4 through the air duct 5 and the integrated pressure retaining valve 1. When the air spring 4 needs to be deflated, the gas in the air spring 4 is discharged into the gas reservoir 3 through the integrated pressure retaining valve 1 and the air duct 5.

As shown in FIGS. 2 to 5, the integrated pressure retaining valve 1 includes a valve housing 10, a pressure retaining component, and a fixing component. The valve housing 10 has a first end 101 and a second end 102 arranged opposite to each other in an axial direction of the integrated pressure retaining valve 1. The valve housing 10 is detachably connected to an airport of the air spring 4. The pressure retaining component includes a valve core 21, a reset piece 22 and a first sealing piece 23. The valve core 21 is located inside the valve housing 10. The first sealing piece 23 is fixed on the valve core 21. The reset piece 22 is connected between the valve housing 10 and the valve core 21. The reset piece 22 is configured to apply a force to the valve core 21 when the integrated pressure retaining valve 1 is in a pressure retaining state, so that the first sealing piece 23 seals the first end 101. The fixing component includes a fixing piece 31. The fixing piece 31 is at least located within the valve housing 10. The fixing piece 31 is configured to be detachably connected to the air duct 5 when the air duct 5 is inserted into the integrated pressure retaining valve 1, so as to allow the air duct 5 to detach the first sealing piece 23 from the first end 101 through the valve core 21, and to conduct the air duct 5 with the airport of the air spring 4.

Where, the axial direction of the integrated pressure retaining valve 1 is X-axis direction. The valve housing 10 has a cavity. The cavity runs through the valve housing 10 along the axial direction of the integrated pressure retaining valve 1. The cross-section of the cavity can be circular.

In the axial direction of the integrated pressure retaining valve 1, the first end 101 of the valve housing 10 is facing the air spring 4, and the second end 102 thereof is away from the air spring 4.

As shown in FIG. 2, a sealing ring 103 is provided on the valve housing 10. A material of the sealing ring 103 can be rubber. When the valve housing 10 is connected to the air spring 4, the sealing ring 103 can be in contact with an outer wall of the valve housing 10 and an inner wall of the airport of the air spring 4, to ensure the sealing between the valve housing 10 and the air spring 4.

The valve core 21 can move within the cavity of the valve housing 10. The first sealing piece 23 can be made of a rubber material. In some examples, the first sealing piece 23 can be a rubber ring.

A connection relationship between the first sealing piece 23 and the valve core 21 includes but is not limited to clamping and bonding.

The reset piece 22 can be compressed under an external force and can be restored to its initial state after the external force is removed. An initial state of the reset piece 22 is one that it has not been subjected to an external force. The reset piece 22 can be a spring or an elastic rubber.

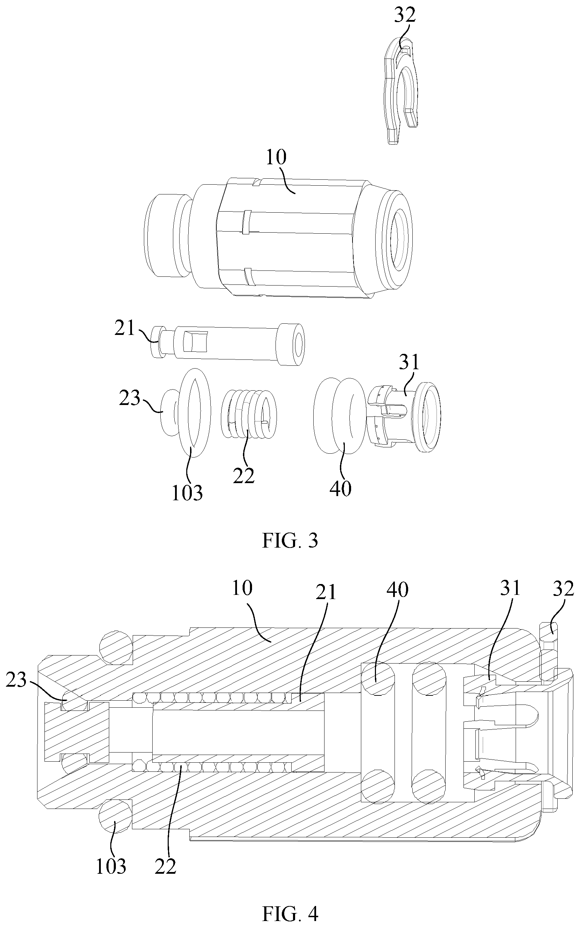

When the integrated pressure retaining valve 1 is installed on the air spring 4 and the air duct 5 is not installed with the integrated pressure retaining valve 1, the integrated pressure retaining valve 1 is in a pressure retaining state, and the integrated pressure retaining valve 1 can seal the gas in the air spring 4, to ensure an internal gas pressure of the air spring 4. Specifically, as shown in FIG. 4, when the integrated pressure retaining valve 1 is installed on the air spring 4 and the air duct 5 is not installed with the integrated pressure retaining valve 1, the reset piece 22 applies a force to the valve core 21, so that the first sealing piece 23 can seal the first end 101 of the valve housing 10, and thus the first end 101 of the valve housing 10 can seal the airport of the air spring 4, and then seal the gas in the air spring 4 and ensure the internal gas pressure of the air spring 4.

When the integrated pressure retaining valve 1 is installed to the air spring 4 and the air duct 5 is installed with the integrated pressure retaining valve 1, the air duct 5 is inserted into the integrated pressure retaining valve 1 and the fixing piece 31 fixes the air duct 5, to allows the air duct 5 to detach the first sealing piece 23 from the first end 101 through the valve core 21. That is to say, the first sealing piece 23 does not seal the first end 101 of the valve housing 10, and thus the air duct 5 is conducted with the airport of the air spring 4.

For the integrated pressure retaining valve provided in the embodiment of the present application, in the installation process of the air suspension system, by connecting the integrated pressure retaining valve 1 to the airport of the air spring 4 and the reset piece 22 of the integrated pressure retaining valve 1 applying a force to the valve core 21, the first sealing piece 23 can seal the first end 101 and thus the integrated pressure retaining valve 1 is in the pressure retaining state, thereby ensuring the internal gas pressure of the air spring 4, avoiding adjustment of the shape of the air spring 4, which makes the installation of the air spring 4 time-saving and labor-saving. Afterwards, after the air spring 4 is installed to the frame, the air duct 5 is directly inserted into the integrated pressure retaining valve 1, the air duct 5 is fixed by the fixing piece 31, thereby conducting the air duct 5 with the airport of the air spring 4 and thus making the installation process of the air suspension system time-saving and labor-saving. In addition, when the air duct 5 is detached from the integrated pressure retaining valve 1, the reset piece 22 of the integrated pressure retaining valve 1 applies a force to the valve core 21, so that the first sealing piece 23 can seal the first end 101 and the integrated pressure retaining valve 1 is in a pressure retaining state, ensuring the internal gas pressure of the air spring 4 and thus ensuring a driving safety of the vehicle. When performing an airtightness testing on the air spring, the air duct 5 is detached, and the reset piece 22 of the integrated pressure retaining valve 1 applies a force to the valve core 21, so that the first sealing piece 23 can seal the first end 101 and the integrated pressure retaining valve 1 is in a pressure retaining state, ensuring the internal gas pressure of the air spring 4 and facilitating detection of an airtightness of the air spring 4.

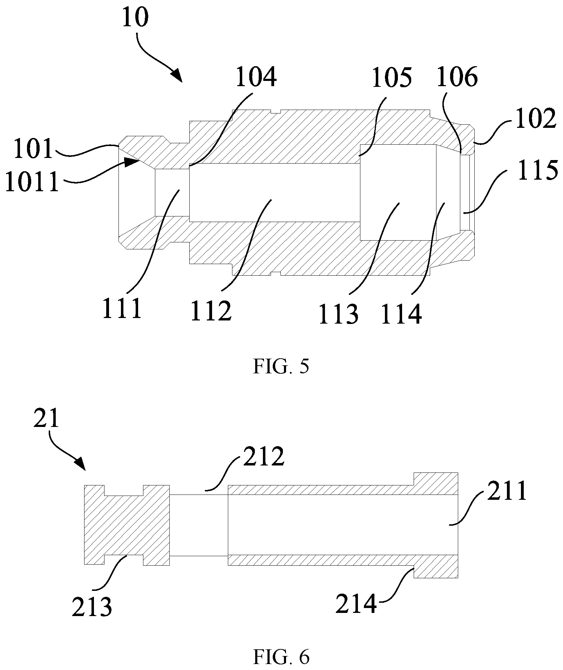

In a possible implementation, as shown in FIG. 6, the valve core 21 has a gas channel 211 and a conducting port 212. The gas channel 211 runs through an end of the valve core 21 away from the air spring 4 in the axial direction of the integrated pressure retaining valve 1. The conducting port 212 is communicated with the gas channel 211. The gas channel 211 can be communicated with the air duct 5.

As show in FIGS. 4 and 5, the first sealing piece 23 is clamped on the valve core 21, the valve housing 10 has a sealing surface 1011, the first sealing piece 23 is in contact with the sealing surface 1011, to position the conducting port 212 of the valve core 21 on a side of the first sealing piece 23 away from the air spring 4.

Where, a shape of the valve core 21 can be cylindrical, the valve core 21 at least partially fits with the inner wall of the valve housing 10, and an axis of the valve core 21 coincides with an axis of the integrated pressure retaining valve 1.

A shape of the gas channel 211 can be cylindrical.

A shape of the conducting port 212 is not specifically limited here, and the number of the conducting port 212 can be one or multiple.

The first sealing piece 23 is a rubber ring. A groove 213 is provided on the valve core 21, and the rubber ring is clamped in the groove 213.

The reset piece 22 is a spring. A first step 104 is provided inside the valve housing 10. The valve core 21 has a valve core step 214. The spring is abutted between the first step 104 and the valve core step 214.

The sealing surface 1011 is located at the first end 101 of the valve housing 10. As shown in FIG. 4, when the integrated pressure retaining valve 1 is installed on the air spring 4 and the air duct 5 is not installed with the integrated pressure retaining valve 1, the integrated pressure retaining valve 1 is in a pressure retaining state, and the first sealing piece 23 is in contact with the sealing surface 1011, so that the conducting port 212 of the valve core 21 is located on a side of the first sealing piece 23 away from the air spring 4, that is, the conducting port 212 of the valve core 21 is not conducted with the airport of the air spring 4.

When the integrated pressure retaining valve 1 is installed on the air spring 4 and the air duct 5 is installed with the integrated pressure retaining valve 1, the air duct 5 is inserted into the integrated pressure retaining valve 1, the air duct 5 pushes the valve core 21, the valve core 21 compresses the spring, and the valve core 21 moves toward a direction of the airport of the air spring 4, so that the air duct 5 detaches the first sealing piece 23 from the sealing surface 1011 through the valve core 21, the gas channel 211 of the valve core 21 is communicated with the air duct 5, the conducting port 212 of the valve core 21 is conducted with the airport of the air spring 4, and the fixing piece 31 fixes the air duct 5.

In a possible implementation, as shown in FIGS. 3 and 4, the integrated pressure retaining valve 1 also includes a second sealing piece 40. A second step 105 is provided inside the valve housing 10. The second step 105 is further away from the air spring 4 relative to the first step104 in the axial direction of the integrated pressure retaining valve 1. The second sealing piece 40 is located between the pressure retaining component and the fixing component in the axial direction of the integrated pressure retaining valve 1, and the second sealing piece 40 is abutted with the second step 105.

Where, when the air duct 5 is inserted into the integrated pressure retaining valve 1, an inner side of the second sealing piece 40 is abutted with an outer wall of the air duct 5, and an outer side of the second sealing piece 40 is abutted with an inner wall of the valve housing 10. In this way, it is possible to improve the sealing between the air duct 5 and the integrated pressure retaining valve 1, and avoid a gas leakage between the air duct 5 and the integrated pressure retaining valve 1.

The second sealing piece 40 can be made of a rubber material. In some examples, the second sealing piece 40 can be a rubber ring.

The number of the second sealing piece 40 can be one or multiple without specific limitation herein.

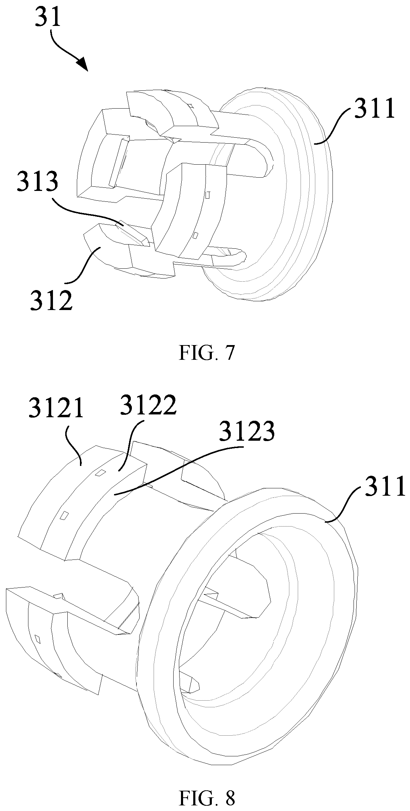

In a possible implementation, as shown in FIGS. 7 and 8, the fixing piece 31 can move upwards along the axial direction of the integrated pressure retaining valve 1. The fixing piece 31 includes a circular ring body 311, a plurality of cantilevers 312, and a plurality of fixing protrusions 313. The plurality of cantilevers 312 and the plurality of fixing protrusions 313 are fixedly connected in sequence along a circumferential direction of the circular ring body 311. Two adjacent cantilevers 312 are spaced apart. At least one fixing protrusion 313 is fixed on an inner side of each cantilever 312, and the fixing protrusion 313 can compress the air duct 5.

Where, as shown in FIG. 5, the cavity of the valve housing 10 includes a first section 111, a second section 112, a third section 113, a fourth section 114, and a fifth section 115, which are connected sequentially along the axis direction of the integrated pressure retaining valve 1. Inner walls of the first section 111, the second section 112, the third section 113 and the fifth section 115 are all cylindrical, and an inner wall of the fourth section 114 is conical. A diameter of the first section 111 is smaller than a diameter of the second section 112, the diameter of the second section 112 is smaller than a diameter of the third section 113, the diameter of the third section 113 is larger than a diameter of the fifth section 115, and a diameter of the fourth section 114 gradually decreases in a direction from the third section 113 toward the fifth section 115. The first step 104 is formed between the first section 111 and the second section 112, the second step 105 is formed between the second section 112 and the third section 113, and a third step 106 is formed between the fourth section 114 and the fifth section 115.

The circular ring body 311 of the fixing piece 31 is located outside the valve housing 10. The circular ring body 311 can be abutted with the second end 102 of the valve housing 10. The plurality of cantilevers 312 and the plurality of fixing protrusions 313 of the fixing piece 31 are located inside the valve housing 10.

The cantilever 312 has a cylindrical surface 3121, a conical surface 3122 and a first limiting step 3123. The cylindrical surface 3121 fits with an inner wall of the third section 113, and the conical surface 3122 fits with an inner wall of the fourth section 114.

The first limiting step 3123 can be abutted with the third step 106 to limit a detachment of the fixing piece 31 from the valve housing 10.

The number of the cantilevers 312 and the fixing protrusions 313 is not specifically limited herein. In some examples, the fixing protrusions 313 are obliquely connected to the cantilevers 312. The number of the cantilevers 312 is 4, and the number of the fixing protrusions 313 is 4.

A material of the cantilevers 312 can be a plastic. A material of the fixing protrusions 313 can be a metal. A material of the air duct 5 is a plastic. It should be noted that an insertion mark 501 is provided on the air duct 5, that is to say, a portion between an insertion end of the air duct 5 and the insertion mark 501 is a portion of the air duct 5 inserted into the integrated pressure retaining valve 1.

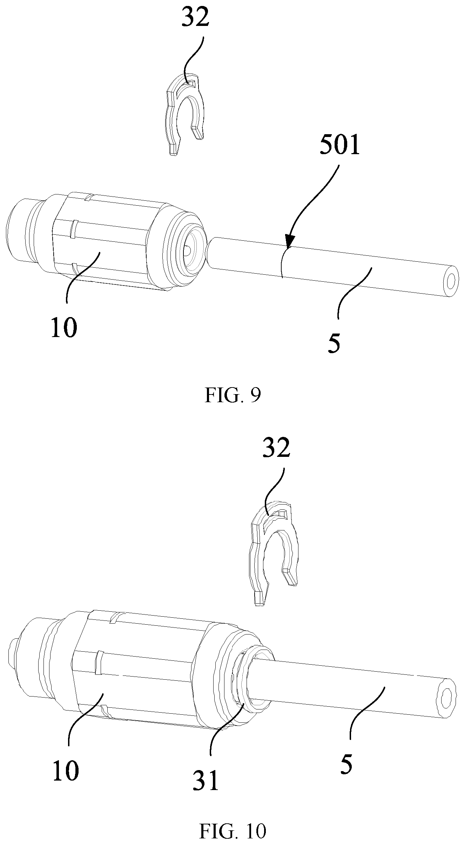

As shown in FIG. 9, when the air duct 5 is installed with the integrated pressure retaining valve 1, the fixing piece 31 is pushed toward the air spring 4, so that the circular ring body 311 is abutted with the second end 102 of the valve housing 10. At this time, the cylindrical surface 3121 fits with the inner wall of the third section 113. Afterwards, as shown in FIG. 10, the insertion end of the air duct 5 is inserted into the integrated pressure retaining valve 1, the air duct 5 is in contact with the valve core 21 and pushes the valve core 21, the valve core 21 compresses the spring, and the valve core 21 moves toward the direction of the airport of the air spring 4. Then the first sealing piece 23 is detached from the sealing surface 1011, the gas channel 211 of the valve core 21 is communicated with the air duct 5, the conducting port 212 of the valve core 21 is conducted with the airport of the air spring 4. When the insertion mark 501 enters the interior of the integrated pressure retaining valve 1, insertion of the air duct 5 is stopped. Afterwards, the fixing piece 31 is pulled out away from the air spring 4, the conical surface 3122 of the fixing piece 31 slides along the inner wall of the fourth section 114 of the valve housing 10, the cantilevers 312 of the fixing piece 31 are compressed by the inner wall of the fourth section 11, and the cantilevers 312 of the fixing piece 31 are deformed towards the air duct 5. The fixing protrusion 313 of the fixing piece 31 squeezes the air duct 5, to cause a depression on the surface of the air duct 5. When the first limiting step 3123 is abutted with the third step 106, the pulling of the fixing piece 31 is stopped. At this time, the cylindrical surface 3121 fits with the inner wall of the third section 113, the conical surface 3122 fits with the inner wall of the fourth section 114, the fixing piece 31 fixes the air duct 5. Then an installation of the air duct 5 is completed. It should be noted that when the air duct 5 is installed to the integrated pressure retaining valve 1, an axis of the air duct 5 is coaxial with the axis of the valve core 21.

When the air duct 5 is detached from the integrated pressure retaining valve 1, the fixing piece 31 is pushed toward the air spring 4, the conical surface 3122 of the fixing piece 31 slides along the inner wall of the fourth section 114 of the valve housing 10, and the fixing protrusion 313 of the fixing piece 31 is gradually detached from the air duct 5. When the circular ring body 311 is abutted with the second end 102 of the valve housing 10, the fixing protrusion 313 of the fixing piece 31 is detached from the air duct 5, that is to say, the fixing piece 31 is not in contact with the air duct 5, that is, the fixing piece 31 unlocks the air duct 5. At this time, the air duct 5 is pulled out of the integrated pressure retaining valve 1. The detachment of the air duct 5 is then completed.

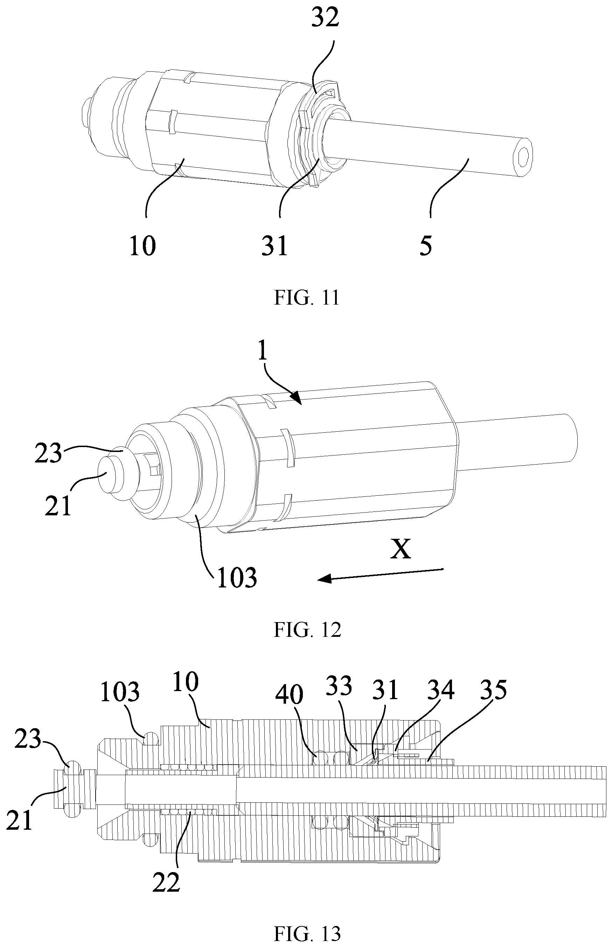

In a possible implementation, as shown in FIG. 11, the fixing component further includes a snap ring 32. The snap ring 32 can be clamped onto the plurality of cantilevers 312 of the fixing piece 31. When the air duct 5 is installed to the integrated pressure retaining valve 1, the snap ring 32 is clamped onto the plurality of cantilevers 312 of the fixing piece 31, and the snap ring 32 is abutted with the circular ring body 311 and the second end 102 of the valve housing 10, respectively, which can prevent the fixing piece 31 from moving toward the air spring 4 and thus make fixation of the integrated pressure retaining valve 1 to the air duct 5 stable.

Where, when the air duct 5 is detached from the integrated pressure retaining valve 1, the snap ring 32 is first detached from the fixing piece 31, and then, the fixing piece 31 is pushed toward the air spring 4, the circular ring body 311 is abutted with the second end 102 of the valve housing 10, and then, the air duct 5 is pulled out from the integrated pressure retaining valve 1. The detachment of the air duct 5 is then completed.

The difference of the integrated pressure retaining valve 1 in Embodiment II from the integrated pressure retaining valve 1 in Embodiment I is that both the valve housing 10 and the fixing component are different. The pressure retaining component of the integrated pressure retaining valve 1 in Embodiment II is the same as the pressure retaining component of the integrated pressure retaining valve 1 in Embodiment I.

In a possible implementation, as shown in FIGS. 12 to 15, the fixing piece 31 is fixed inside the valve housing 10. The fixing piece 31 includes a circular ring body 311 and a plurality of cantilevers 312. The axis of the circular ring body 311 is coaxial with the axis of the valve core 21. The plurality of cantilevers 312 are fixedly connected to the circular ring body 311 in sequence along a circumferential direction of the circular ring body 311. Two adjacent cantilevers 312 are spaced apart. The cantilever 312 can compress the air duct 5.

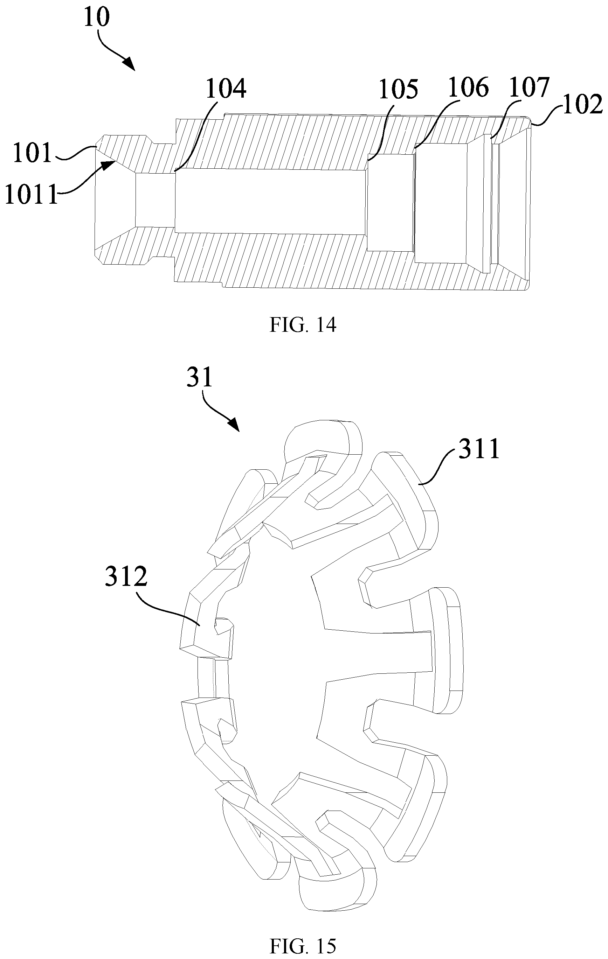

Where, as shown in FIG. 15, an end of the cantilever 312 away from the circular ring body 311 is inclined toward the axis of the circular ring body 311.

As shown in FIGS 13 and 14, the fixing component further includes a limiting ring 33, a fixing ring 34, and a detachment sleeve 35. A third step 106 and a fourth step 107 are provided inside the valve housing. The limiting ring 33 and the fixing ring 34 are fixed between the third step 106 and the fourth step 107. The plurality of cantilevers 312 of the fixing piece 31 are located inside the limiting ring 33. The circular ring body 311 of the fixing piece 31 is sandwiched between the limiting ring 33 and the fixing ring 34, so that the fixing piece 31 can be fixed inside the valve housing 10.

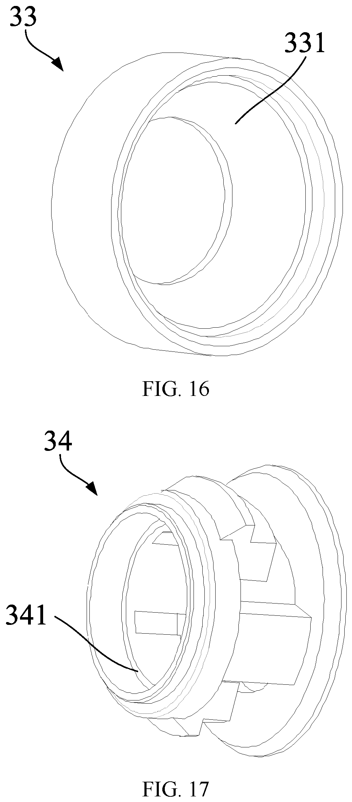

As shown in FIG. 16, the limiting ring 33 has a limiting surface 331. The limiting surface 331 is a conical surface.

The detachment sleeve 35 is movably limited between the fixing ring 34 and the fixing piece 31. When the air duct 5 is detached from the integrated pressure retaining valve 1, the detachment sleeve 35 compresses the plurality of cantilevers 312 of the fixing piece 31 along the axial direction of the integrated pressure retaining valve 1, to detach the plurality of cantilevers 312 of the fixing piece 31 from the air duct 5.

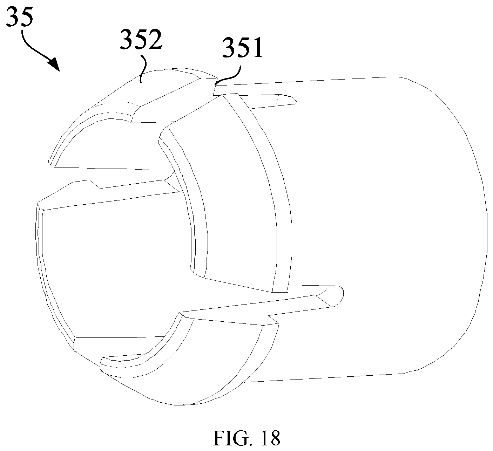

As shown in FIGS. 17 and 18, the fixing ring 34 has a second limiting step 341. The detachment sleeve 35 has a matching step 351. The matching step 351 can be with the second limiting step 341 to limit the detachment of the detachment 35 from the valve housing 10.

As shown in FIG. 18, the detachment sleeve 35 also has a detachment surface 352. The detachment surface 352 is a circular conical surface. The detachment surface 352 is used to detach the plurality of cantilevers 312 of the fixing piece 31 from the air duct 5 when the air duct 5 is detached from the integrated pressure retaining valve 1, to detach the air duct 5.

A material of the cantilever 312 can be a metal. A material of the air duct 5 is a plastic. It should be noted that an insertion mark 501 is provided on the air duct 5 (as shown in FIG. 9), that is to say, the part between the insertion end of the air duct 5 and the insertion mark 501 is the part of the air duct 5 inserted into the integrated pressure retaining valve 1.

As shown in FIG. 12, when the air duct 5 is installed with the integrated pressure retaining valve 1, the detachment sleeve 35 is pulled toward the direction away from the air spring 4, and the matching step 351 of the detachment sleeve 35 is abutted with the second limiting step 341. At this time, the detachment surface 352 of the detachment sleeve 35 is not in contact with the cantilever 312 of the fixing piece 31. Afterwards, the insertion end of the air duct 5 is inserted into the integrated pressure retaining valve 1, the cantilever 312 of the fixing piece 31 squeezes the air duct 5, to cause a depression on the surface of the air duct 5. The air duct 5 is in contact with the valve core 21 and pushes the valve core 21. Then the valve core 21 compresses the spring, and the valve core 21 moves toward the direction of the airport of the air spring 4, the first sealing piece 23 is detached from the sealing surface 1011, the gas channel 211 of the valve core 21 is communicated with the air duct 5, and the conducting port 212 of the valve core 21 is conducted with the airport of the air spring 4. When the insertion mark 501 enters the interior of the integrated pressure retaining valve 1, the insertion of the air duct 5 is stopped. At this time, the fixing piece 31 fixes the air duct 5. The installation of the air duct 5 is then completed. It should be noted that when the air duct 5 is installed on the integrated pressure retaining valve 1, the axis of the air duct 5 can be coaxial with the axis of the valve core 21.

When the air duct 5 is detached from integrated pressure retaining valve 1, the detachment sleeve 35 is pushed toward the air spring 4, the detachment surface 352 of the detachment sleeve 35 is in contact with the plurality of cantilevers 312 of the fixing piece 31, the detachment surface 352 compresses the cantilevers 312 toward the limiting surface 331 of the limiting ring 33. When the cantilevers 312 are in contact with the limiting surface 331, the plurality of cantilevers 312 of the fixing piece 31 are detached from the air duct 5. At this time, the air duct 5 is pulled out from the integrated pressure retaining valve 1, and the detachment of the air duct 5 is completed. The limiting surface 331 of the limiting ring 33 can limit the plurality of cantilevers 312 of the fixing piece 31, to prevent excessive deformation of the plurality of cantilevers 312 of the fixing piece 31.

An embodiment of the present application provides an air suspension system, which includes an air spring 4, an air duct 5 and an integrated pressure retaining valve 1. The integrated pressure retaining valve 1 is detachably installed between the air spring 4 and the air duct 5.

Where, the integrated pressure retaining valve 1 in this embodiment has the same structure as the integrated pressure retaining valve provided in any one of the above embodiments and can bring the same or similar technical effects, which will not be repeated here. For details, please refer to the description of the above embodiments.

An embodiment of the present application provides a vehicle, which includes the air suspension system.

Where, the air suspension system in this embodiment has the same structure as the air suspension system provided in any one of the above embodiments, and can bring the same or similar technical effects, which will not be repeated here. For details, please refer to the description of the above embodiments.

Finally, it should be noted that: the foregoing embodiments are merely intended for describing the technical solutions of the present invention other than limiting them. Although the present invention is described in detail with reference to the foregoing embodiments, a person of ordinary skill in the art should understand that: they may still make modifications to the technical solutions described in the foregoing embodiments or make equivalent replacements to some or all technical features therein. However, these modifications or replacements do not cause the essence of corresponding technical solutions to depart from the scope of the technical solutions of the embodiments of the present invention.

## Claims

1. An integrated pressure retaining valve, which applied to an air suspension system of a vehicle, the air suspension system comprising an air spring and an air duct, **characterized in that**, the integrated pressure retaining valve comprises a valve housing, a pressure retaining component, and a fixing component;
the valve housing has a first end and a second end arranged opposite to each other in an axial direction of the integrated pressure retaining valve, the valve housing is detachably connected to an airport of the air spring;
the pressure retaining component comprises a valve core, a reset piece, and a first sealing piece, the valve core is located at the first end of the valve housing, the first sealing piece is fixed on the valve core, the reset piece is connected between the valve housing and the valve core, the reset piece is configured to apply a force to the valve core when the integrated pressure retaining valve is in a pressure retaining state, to seal the first end by the first sealing piece; and
the fixing component comprises a fixing piece, the fixing piece is at least partially located within the valve housing, the fixing piece is configured to be detachably connected to the air duct when the air duct is inserted into the integrated pressure retaining valve, to allow the air duct to detach the first sealing piece from the first end through the valve core, and to conduct the air duct with the airport of the air spring.

2. The integrated pressure retaining valve according to claim 1, **characterized in that**, the valve core has a gas channel and a conducting port, the gas channel runs through an end of the valve core away from the air spring in the axial direction of the integrated pressure retaining valve, the conducting port is communicated with the gas channel, and the gas channel can be communicated with the air duct; and
the first sealing piece is clamped on the valve core, the valve housing has a sealing surface, and the first sealing piece is in contact with the sealing surface, to position the conducting port of the valve core on a side of the first sealing piece away from the air spring.

3. The integrated pressure retaining valve according to claim 2, **characterized in that**, the reset piece is a spring, a first step is provided inside the valve housing, the valve core has a valve core step, and the spring is abutted between the first step and the valve core step.

4. The integrated pressure retaining valve according to claim 3, **characterized by** further comprising: a second sealing piece, a second step is provided inside the valve housing, the second step is further away from the air spring relative to the first step in the axial direction of the integrated pressure retaining valve, the second sealing piece is located between the pressure retaining component and the fixing component in the axial direction of the integrated pressure retaining valve, and the second sealing piece is abutted with the second step, and when the air duct is inserted into the integrated pressure retaining valve, an inner side of the second sealing piece is abutted with an outer wall of the air duct, and an outer side of the second sealing piece is abutted with an inner wall of the valve housing.

5. The integrated pressure retaining valve according to any one of claims 1 to 4, **characterized in that**, the fixing piece is movable upwards along the axial direction of the integrated pressure retaining valve, the fixing piece comprises a circular ring body, a plurality of cantilevers, and a plurality of fixing protrusions, the plurality of cantilevers and the plurality of fixing protrusions are fixedly connected in sequence along a circumferential direction of the circular ring body, two adjacent cantilevers are spaced apart, at least one fixing protrusion is fixed on an inner side of each cantilever, and the fixing protrusion is capable of compressing the air duct.

6. The integrated pressure retaining valve according to claim 5, **characterized in that**, the fixing component further comprises a snap ring, the snap ring is capable of being clamped on the plurality of cantilevers of the fixing piece.

7. The integrated pressure retaining valve according to any one of claims 1 to 4, **characterized in that**, the fixing piece is fixed inside the valve housing, the fixing piece comprises a circular ring body and a plurality of cantilevers, an axis of the circular ring body is coaxial with an axis of the valve core, and the plurality of cantilevers are fixedly connected to the circular ring body in sequence along a circumferential direction of the circular ring body, two adjacent cantilevers are spaced apart, and the cantilevers is capable of compressing the air duct.

8. The integrated pressure retaining valve according to claim 7, **characterized in that**, the fixing component further comprises a limiting ring, a fixing ring, and a detachment sleeve, a third step and a fourth step are provided inside the valve housing, and the limiting ring and the fixing ring are fixed between the third step and the fourth step, the circular ring body of the fixing piece is sandwiched between the limiting ring and the fixing ring; and
the detachment sleeve is movably limited between the fixing ring and the fixing piece, and when the air duct is detached from the integrated pressure retaining valve, the detachment sleeve compresses the plurality of cantilevers of the fixing piece along the axial direction of the integrated pressure retaining valve, to detach the plurality of cantilevers of the fixing piece from the air duct.

9. An air suspension system, **characterized by** comprising: an air spring, an air duct and the integrated pressure retaining valve according to any one of claims 1 to 8; and
the integrated pressure retaining valve is detachably installed between the air spring and the air duct.

10. A vehicle, **characterized by** comprising: the air suspension system according to claim 9.
